# EUROPEAN PATENT APPLICATION

(11) **EP 4 477 119 A1**
(43) Date of publication of application: **18.12.2024**
(21) Application number: 23196033.7
(22) Date of filing: 07.09.2023
(51) Int. Cl.: A47J 36/32

(54) **WEIGHABLE INDUCTION COOKER AND CONTROL METHOD THEREOF**

(30) Priority: 12.06.2023 CN 202310697501
(71) Applicant: Jiangmen Yishan Metal Products Co., Ltd., Jiangmen City, Guangdong Province 529100 (CN)
(72) Inventor: LEE, CHANGHO, Jiangmen City, Guangdong Province, 529100 (CN); LEE, WONYOUNG, Jiangmen City, Guangdong Province, 529100 (CN)
(74) Representative: Arsuaga Santos, Elisa

(57) **Abstract**

A weighable induction cooker and a control method thereof are disclosed. When using the induction cooker, weight of water and food ingredients in a container is monitored and acquired through a weighing module, and a fluid control device on a cover body is controlled according to a weight change value to realize automatic quantitative water addition of a water outlet, and the cover body does not need to be removed when adding water, so that a water volume in the container can be accurately controlled, the operation is convenient, and food ingredient cooking can be performed automatically.

## Description

### TECHNICAL FIELD

The present invention relates to cooking utensils, and more particularly, to a weighable induction cooker and a control method thereof.

### BACKGROUND

Induction cooker is a common cooking utensil in modern families, which uses an alternating current to generate a magnetic field through a coil below a ceramic plate. When a magnetic force line in the magnetic field passes through the bottom of an iron pot, a stainless steel pot, or the like, an eddy current will be generated, so that the bottom of the pot heats up quickly, thus achieving the purpose of heating food. At present, when users use the induction cooker to cook, they need to weigh food ingredients and water separately before putting them into the induction cooker. Sometimes the users miss the best cooking time due to special circumstances, the food ingredients are put into the pot before the water in the pot boils, or the moisture of food is evaporated during heat preservation, which leads to the flavor deterioration of the food. Therefore, the users need to always pay attention to cooking situations and add water. In addition, the users sometimes forget to turn off the power supply, and the food ingredients in the pot are heated for a long time, which will not only burn the food, but also dry the water in serious cases. If the users do not add water in time, the temperature of the pot will be too high, which may lead to a fire.

### SUMMARY

The present invention aims to solve at least one of the technical problems in the existing technology, and provides a weighable induction cooker and a control method thereof, which can realize automatic cooking through weighing and automatically adding water via a cover body.

In a first aspect, an embodiment of the present invention provides a weighable induction cooker, which comprises a container, an induction cooker body, a water tank and a cover body, the induction cooker body comprises a weighing module for measuring a weight of the container, an electromagnetic power output module for heating water and food ingredients in the container, a first controller and a first communication module, and the cover body comprises a water inlet, a water outlet for adding water to the container, a fluid control device for controlling water discharge of the water outlet, a second controller and a second communication module, wherein:
the container is configured for containing the water and the food ingredients, and is provided with a first opening,
the water tank is configured for storing water,
the cover body is configured for closing the first opening of the container, the water inlet is connected with the water tank, the water outlet is connected with the water inlet through the fluid control device, the second controller is connected with the second communication module and the fluid control device respectively, and the second communication module is in communication connection with the first communication module, and
the first controller is in communication connection with the weighing module, the electromagnetic power output module and the first communication module respectively, and is configured to acquire the weight of the container through the weighing module, and send a first target control instruction to the second communication module through the first communication module according to the weight, and the second controller is configured to acquire the first target control instruction through the second communication module, and control a working state of the fluid control device according to the first target control instruction, so that the water outlet adds water to the container or stops adding water.

In an embodiment of the present invention, the fluid control device is a water pump or a water flow switch.

In an embodiment of the present invention, the water tank is arranged outside the cover body and the induction cooker body, or the water tank is arranged inside the induction cooker body.

In an embodiment of the present invention, an Internet of Things communication module for communicating with a server, a mobile terminal or a smart home control module is further arranged in the cover body, the Internet of Things communication module is in communication connection with the second controller, the second controller is configured to acquire an Internet of Things control signal through the Internet of Things communication module, and control the working state of the fluid control device according to the Internet of Things control signal, and/or send a second target control instruction to the induction cooker body through the second communication module.

In an embodiment of the present invention, the Internet of Things control signal comprises menu information, the induction cooker may be remotely controlled to heat or add water through an Internet of Things device, which will send an alarm signal to a user when water needs to be added. Automatic water addition can also be realized according to the menu information.

In an embodiment of the present invention, a temperature sensor and an air pressure sensor are further arranged in the induction cooker body, the first controller is connected with the temperature sensor and the air pressure sensor respectively, and the first controller is configured to acquire temperature information of the container through the temperature sensor, acquire air pressure information of a current working environment of the induction cooker through the air pressure sensor, and adjust an instruction content of the first target control instruction according to the temperature information and/or the air pressure information.

In an embodiment of the present invention, the first controller acquires the weight through the weighing module first, and in combination with the temperature information acquired by the temperature sensor and the air pressure information acquired by the air pressure sensor, temperature of the food ingredients and the water and the boiling point corresponding to a current air pressure can be obtained, so as to accurately judge a boiling situation of the water in the container. In an embodiment, the working state of the electromagnetic power output module may be controlled as needed to set and maintain a continuous boiling state of the water in the container, and the water outlet on the cover body is controlled to add water through the fluid control device.

In an embodiment of the present invention, the induction cooker body further comprises a supporting component for supporting the container, and the electromagnetic power output module and the weighing module are arranged below the supporting component.

In an embodiment of the present invention, the electromagnetic power output module comprises a power output circuit and a coil arranged below the supporting component, the weighing module comprises a strain gauge arranged inside or around the coil, the strain gauge is connected with the first controller, and the coil is connected with the first controller through the power output circuit.

In an embodiment of the present invention, the first controller is configured to obtain a type and a weight of the food ingredients to be placed in the container, and control the first communication module to send the first target control instruction to the second communication module according to the type of the food ingredients placed in the container and the weight of the food ingredients obtained through the weighing module, so that the second controller controls the fluid control device to automatically add water according to the first target control instruction; the first controller is further configured to control the electromagnetic power output module to heat the food ingredients in the container based on the type and the weight of the food ingredients, wherein the first controller is configured to obtain the type and the weight of the food ingredients to be placed in the container by acquiring settings input by a user or by automatically identifying the food ingredients.

In a second aspect, an embodiment of the present invention provides a control method of a weighable induction cooker for controlling the induction cooker in the first aspect of the embodiment of the present invention and controlling the electromagnetic power output module, which comprises the following steps of:
acquiring, by the first controller, the weight of the container through the weighing module, and sending the first target control instruction to the second communication module through the first communication module according to the weight; and
acquiring, by the second controller, the first target control instruction through the second communication module, and controlling the working state of the fluid control device according to the first target control instruction, so that the water outlet adds water to the container or stops adding water.

In an embodiment of the present invention, the acquiring, by the first controller, the weight of the container through the weighing module, and sending the first target control instruction to the second communication module through the first communication module according to the weight, comprises at least one of the following steps of:
acquiring, by the first controller, an initial weight of the container through the weighing module, and sending the first target control instruction to the second communication module through the first communication module, wherein the first target control instruction comprises a water adding instruction for instructing the cover body to add water to the container; or
in the process of adding water to the container via the cover body, acquiring, by the first controller, a first weight change value of the container through the weighing module, and sending the first target control instruction to the second communication module through the first communication module when the first weight change value reaches a first preset value, wherein the first target control instruction comprises a water adding stop instruction for instructing the cover body to stop adding water to the container; or
in the process of heating the container by the electromagnetic power output module, acquiring, by the first controller, a second weight change value of the container through the weighing module, and sending the first target control instruction to the second communication module through the first communication module when the second weight change value reaches a second preset value, wherein the first target control instruction comprises the water adding instruction for instructing the cover body to add water to the container, and then, acquiring, by the first controller, a third weight change value of the container through the weighing module, and sending, the first target control instruction to the second communication module through the first communication module when the third weight change value reaches a third preset value, wherein the first target control instruction comprises the water adding stop instruction for instructing the cover body to stop adding water to the container; or
in the process of heating the container by the electromagnetic power output module, acquiring, by the first controller, a first temperature of the container through the temperature sensor and a fourth weight change value of the container through the weighing module, and sending the first target control instruction to the second communication module through the first communication module when the first temperature is greater than a preset temperature value and the fourth weight change value reaches a fourth preset value, wherein the first target control instruction comprises an anti-drying instruction for instructing the cover body to add water to the container.

In an embodiment of the present invention, in the process of heating the container by the electromagnetic power output module, acquiring, by the first controller, the second weight change value of the container through the weighing module, and sending the first target control instruction to the second communication module through the first communication module when the second weight change value reaches the second preset value, comprises the following step of:
in the process of heating the container by the electromagnetic power output module, acquiring, by the first controller, the second weight change value of the container through the weighing module, and sending the first target control instruction to the second communication module through the first communication module when the second weight change value reaches the second preset value and a unit time change quantity of the second weight change value is smaller than a first target preset value, wherein the first target control instruction comprises the water adding instruction for instructing the cover body to add water to the container.

In an embodiment of the present invention, in the process of adding water via the water outlet of the cover body, the first controller sends a third target control instruction to the second communication module through the first communication module when detecting that a weight change value per unit time is greater than a second target preset value through the weighing module, wherein the third target control instruction is configured for instructing the cover body to stop adding water to the container.

In an embodiment of the present invention, the preset temperature value is set according to a boiling point corresponding to an air pressure value of a surrounding environment acquired by the air pressure sensor, and the fourth preset value is set according to a weight of the food ingredients and an initial volume of the water acquired by the weighing module.

In an embodiment of the present invention, the induction cooker body further comprises an alarm module, the alarm module is connected with the first controller, and the method further comprises at least one of the following steps of:
in the process of heating the container by the electromagnetic power output module, acquiring, by the first controller, a fifth weight change value of the container through the weighing module, and controlling the alarm module to perform water boiling notification and/or turn off the electromagnetic power output module when the fifth weight change value reaches a fifth preset value; or
in the process of heating the container by the electromagnetic power output module, acquiring, by the first controller, the first temperature of the container through the temperature sensor and the fourth weight change value of the container through the weighing module, and controlling, by the first controller, the alarm module to perform anti-drying notification and/or turn off the electromagnetic power output module when the first temperature is greater than the preset temperature value and the fourth weight change value reaches the fourth preset value.

In an embodiment of the present invention, when the water boiling notification and/or the anti-drying notification is performed, the first controller acquires the alarm signal of the alarm module, sends the alarm signal to the cover body through the first communication module, and then sends the alarm signal to the server, the mobile terminal or the smart home control module through the Internet of Things communication module.

In an embodiment of the present invention, the acquiring, by the first controller, the weight of the container through the weighing module, and sending the first target control instruction to the second communication module through the first communication module according to the weight, comprises:
obtaining, by the first controller, a type and a weight of the food ingredients to be placed in the container;
controlling, by the first controller, the first communication module to send the first target control instruction to the second communication module based on the type of the food ingredients placed in the container and the weight of the food ingredients obtained through the weighing module, so that the second controller controls the fluid control device to automatically add water according to the first target control instruction; wherein the first controller is configured to obtain the type and the weight of the food ingredients to be placed in the container by acquiring settings input by a user or by automatically identifying the food ingredients;
controlling, by the first controller, the electromagnetic power output module to heat the food ingredients in the container based on the type and the weight of the food ingredients.

In a third aspect, an embodiment of the present invention provides an operation control device, which comprises a memory, a processor, and a computer program stored on the memory and executable on the processor, wherein the processor executes the program to implement the control method according to the embodiment in the second aspect above.

In a fourth aspect, an embodiment of the present invention provides an induction cooker, which comprises the operation control device according to the embodiment in the third aspect above.

In a fifth aspect, an embodiment of the present invention provides a computer-readable storage medium, wherein the computer-readable storage medium stores a computer-executable instruction, and the computer-executable instruction is configured for enabling a computer to execute the control method according to the embodiment in the second aspect above.

The present invention has the beneficial effects as follows. According to the weighable induction cooker and the control method thereof adopted in the present invention, when using the induction cooker, the weight of the water and the food ingredients in the container are monitored and acquired through the weighing module, and the fluid control device on the cover body is controlled according to the weight change value to realize automatic quantitative water addition of the water outlet, and the cover body does not need to be removed when adding water, so that a water volume in the container can be accurately controlled, the operation is convenient, and food ingredient cooking can be performed automatically.

### BRIEF DESCRIPTION OF THE DRAWINGS

The present invention is further described hereinafter with reference to the drawings and embodiments.
FIG. 1 is a schematic structural diagram of a weighable induction cooker provided by an embodiment of the present invention;
FIG. 2 is a functional block diagram of a circuit of the weighable induction cooker provided by the embodiment of the present invention;
FIG. 3 is a flow chart of a control method of the weighable induction cooker provided by an embodiment of the present invention;
FIG. 4 is a flow chart of a control method of the weighable induction cooker provided by another embodiment of the present invention; and
FIG. 5 is a schematic structural diagram of an operation control device provided by an embodiment of the present invention.

### DETAILED DESCRIPTION

Specific embodiments of the present invention will be described in detail in this part, preferred embodiments of the present invention are shown in the drawings, and the drawings are intended to replenish the description in the written part of the specification with figures, so that people can intuitively and vividly understand each technical feature and the overall technical solution of the present invention, but it cannot be understood as a limitation to the scope of protection of the present invention.

In the description of the present invention, it should be understood that, the orientation or position relationship related to the orientation description, such as the orientation or position relationship indicated by the terms "upper", "lower", "front", "rear", "left", "right", and the like is based on the orientation or position relationship shown in the drawings, which is only used for convenience of the description of the present invention and simplification of the description instead of indicating or implying that the indicated device or element must have a specific orientation, and be constructed and operated in a specific orientation, and thus should not be understood as a limitation to the present invention.

In the description of the present invention, the meaning of several refers to being one or more, and the meaning of "a plurality of" refers to being two or more. The meanings of greater than, less than, more than, etc., are understood as not comprising this number, while the meanings of above, below, within, etc., are understood as comprising this number. If there is the description of first and second, it is only for the purpose of distinguishing technical features, and should not be understood as indicating or implying relative importance, implicitly indicating the number of the indicated technical features or implicitly indicating the order of the indicated technical features.

In the description of the present invention, unless otherwise explicitly defined, the terms "setting", "mounting" and "connecting" should be understood in a broad sense, and those of ordinary skills in the art can reasonably determine the specific meanings of the above terms in the present invention in combination with the specific contents of the technical solution.

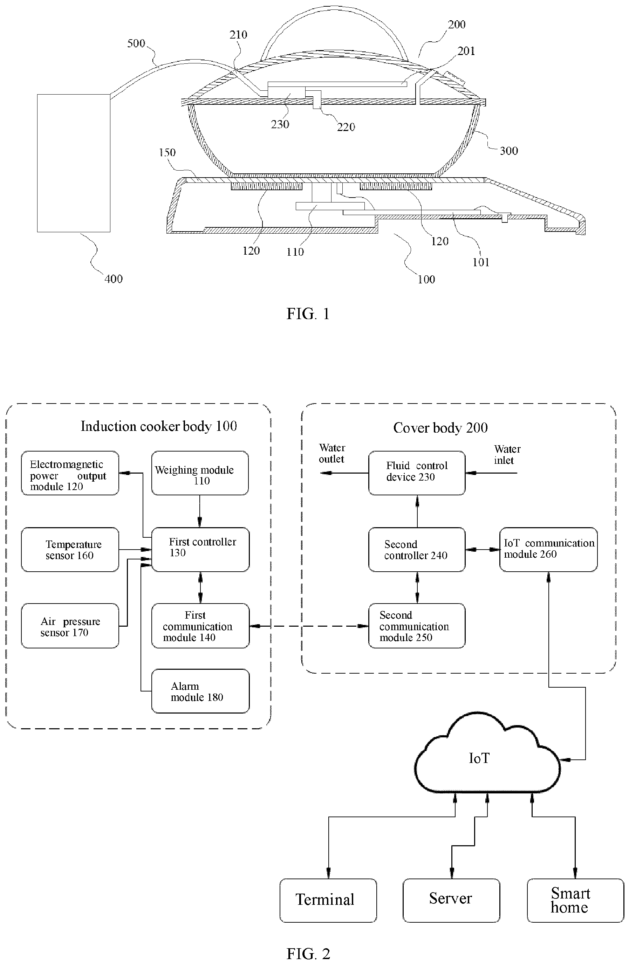

A schematic structural diagram of a weighable induction cooker provided by an embodiment in a first aspect of the present invention refers to FIG. 1 and FIG. 2. It can be understood that the induction cooker comprises an induction cooker body 100, a cover body 200, a container 300 and a water tank 400. The container 300 is placed on an upper side of the induction cooker body 100, the container 300 is configured for containing water or food ingredients, and the container 300 comprises a first opening for adding the water or the food ingredients. In an embodiment, the container 300 may be a pot, such as an iron pot, a stainless steel pot, a cast aluminum pot or a ceramic pot. In another embodiment, the container 300 may be a kettle for boiling water. The cover body 200 is covered on the first opening of the container 300.

The induction cooker body 100 comprises a weighing module 110 for measuring a weight of the container 300 and an electromagnetic power output module 120 for outputting an electromagnetic field to the container 300, and the container 300 can be heated through the electromagnetic power output module 120, so as to heat the food ingredients or the water in the container 300. With reference to FIG. 2, the induction cooker body 100 further comprises a first controller 130, and the first controller 130 is connected with the electromagnetic power output module 120 and the weighing module 110 respectively. In an embodiment, the first controller 130 can control a working state of the electromagnetic power output module 120, such as turning on and off, or controlling and adjusting the output power. In an embodiment, the first controller 130 can receive weight information of the container 300 acquired by the weighing module 110, and control the working state of the electromagnetic power output module 120 according to the weight information. The induction cooker body 100 further comprises a first communication module 140 for communicating with the cover body 200.

The container 300 is placed on the weighing module 110. In an embodiment, as shown in FIG. 1, the induction cooker body 100 further comprises a supporting component 150, and the weighing module 110 is arranged below the supporting component 150, wherein the weighing module 110 may be a strain gauge, such as a cantilever sensor. In another embodiment, the weighing module may also be other pressure sensors, such as a thin-film weighing sensor. When the container 300 is placed on the supporting component 150, the supporting component 150 deforms the weighing module 110, so that the weight of the container 300 can be detected. In an embodiment, the supporting component 150 is a tray arranged in the induction cooker body 100.

In an embodiment, the induction cooker body 100 further comprises a first circuit board 101, wherein the first controller 130 is arranged on the circuit board 101, and in order to weigh accurately, the weighing module 110 is also arranged on the first circuit board 101, and is electrically connected with the first controller 130 on the first circuit board 101.

In order to realize weighing without affecting a basic heating function of the induction cooker, it is necessary to match a relationship between the electromagnetic power output module 120 and the weighing module 110. With reference to FIG. 1, the electromagnetic power output module 120 is a coil arranged below the supporting component 150, wherein the weighing module 110 is arranged in a middle part of the coil, and the first controller 130 is connected with the coil through a power output circuit (not shown in the drawings). In this way, the container 300 can be weighed, and the container 300 can be heated. It should be noted that FIG. 1 is only one position form of the electromagnetic power output module 120 and the weighing module 110. Actually, there may be different setting modes, as long as weighing and electromagnetic heating functions can be realized at the same time. For example, the weighing module 110 may be arranged below the electromagnetic power output module 120, or the weighing module 110 may be arranged around the electromagnetic power output module 120, which is not limited in the present application.

The cover body 200 is covered and mounted on the first opening of the container 300, and on one hand, the cover body 200 may be configured for closing the container 300, so as to facilitate further cooking of the food ingredients. The cover body 200 comprises a water inlet 210 and a water outlet 220, and a fluid control device 230 for controlling the water outlet 220 to add water to the container 300, wherein the water inlet 210 is communicated with the water tank 400 through a water inlet pipe 500. In an embodiment, the fluid control device 230 may be a water pump, so that water in the water tank 400 can be directly pumped in from the water inlet 210 and discharged from the water outlet 220, so as to add water to the container 300. In another embodiment, the fluid control device 230 may be only provided with a water flow switch with a simple switching on and off function, such as an electromagnetic valve. When the water tank 400 is placed in a position higher than that of the water outlet 220, it is only necessary to switch on the electromagnetic valve to control water addition from the water outlet 220 to the container 300.

In order to control the fluid control device 230, the cover body 200 further comprises a second controller 240, the second controller 240 is electrically connected with the fluid control device 230, and may control a working state of the fluid control device 230, such as controlling a water discharge volume and a water discharge occasion of the water outlet 220. In an embodiment, the second controller 240 is arranged on a second circuit board 201 in the cover body 200.

With reference to FIG. 2, the cover body 200 further comprises a second communication module 250, the second controller 240 is electrically connected with the fluid control device 230, and the second communication module 205 is in communication connection with the first communication module 140. In an embodiment, the first communication module 140 and the second communication module 250 are wireless communication modules, and the first communication module 140 and the second communication module 250 are in communication connection through a wireless signal, wherein wireless transmission modes such as Bluetooth, 2.4g, RFID and Wifi may be adopted. A linkage communication relationship can be established between the induction cooker body 100 and the cover body 200 through the first communication module 140 and the second communication module 250. An exchange linkage control method between the induction cooker body 100 and the cover body 200 will be described below.

In an embodiment, the first controller 130 can send a control instruction to the cover body through the first communication module 140, and the second controller 240 may also receive the control instruction sent by the first controller 130 through the second communication module 250, and vice versa. Combined with the weighing module 110 of the induction cooker body 100, the first controller 130 acquires the weight of the container 300 through the weighing module 110, and sends the first target control instruction to the second communication module 250 through the first communication module 140 according to the weight, and the second controller 240 acquires the first target control instruction through the second communication module 250, so that the second controller 240 may control the working state of the fluid control device 230 according to the first target control instruction, so as to make the water outlet 220 add water to the container 300, or stop adding water in the process of adding water.

In an embodiment, the first controller 130 obtains a type and a weight of the food ingredients to be placed in the container 300, and controls the first communication module 140 to send the first target control instruction to the second communication module 250 according to the type of the food ingredients placed in the container 300 and the weight of the food ingredients obtained through the weighing module, so that the second controller 240 controls the fluid control device 230 to automatically add water according to the first target control instruction. The first controller 130 further controls the electromagnetic power output module 120 to heat the food ingredients in the container 300 based on the type and the weight of the food ingredients.

The first controller 130 obtains the type and the weight of the food ingredients to be placed in the container 300 by acquiring settings input by a user or by automatically identifying the food ingredients. For example, the user may manually input the desired food ingredients and their weights through a control panel (not shown in the figures) on the induction cooker body 100. In another embodiment, automatic identification of the food ingredients may also be performed. For example, a camera (not shown in the figures) built into the container 300 may automatically identify the required weight of the food ingredients. Alternatively, the food ingredients to be placed in the container 300 along with their weights may be automatically identified based on the cooking steps in a recipe input by the user.

When using the induction cooker, the first controller 130 monitors and acquires the weight of the water and the food ingredients in the container 300 through the weighing module 110, and controls the fluid control device 230 on the cover body 200 according to the weight change value to realize automatic quantitative water addition of the water outlet, and the cover body does not need to be removed when adding water, so that a water volume in the container 300 can be accurately controlled, the operation is convenient, and food ingredient cooking can be performed automatically operated.

In an embodiment, with reference to FIG. 1, the water tank 400 is arranged outside the induction cooker body 100 and the cover body 200. In this case, the water tank 400 is communicated with the water inlet 210 of the cover body 200 through the water inlet pipe 500. In another embodiment, the water tank 400 may also be arranged inside the induction cooker body 100.

In an embodiment, with reference to FIG. 2, the cover body 200 further comprises an Internet of Things communication module 260, the second controller is in communication connection with the Internet of Things communication module 260, and the Internet of Things communication module 260 is configured for communicating with a server, a mobile terminal or a smart home control module. In this way, the cover body 200 can feed back the working state of the induction cooker to an Internet of Things platform through the Internet of Things communication module 260. In an embodiment, the second controller 240 acquires an Internet of Things control signal through the Internet of Things communication module 260, and controls the working state of the fluid control device 230 according to the Internet of Things control signal, or sends the second target control instruction to the induction cooker body through the second communication module 250.

In an embodiment, the Internet of Things control signal received by the Internet of Things communication module 260 comprises menu information, the induction cooker may be remotely controlled to heat or add water through an Internet of Things device, which will send an alarm signal to a user when water needs to be added. Automatic water addition may also be realized according to the menu information.

In an embodiment, with reference to FIG. 1 and FIG. 2, a temperature sensor 160 and an air pressure sensor 170 are further arranged in the induction cooker body 100, the first controller 130 is connected with the temperature sensor 160 and the air pressure sensor 170 respectively, the first controller 130 acquires temperature information of the container 300 through the temperature sensor 160, the first controller 130 acquires air pressure information of a current working environment of the induction cooker through the air pressure sensor 170, and the first controller 130 may adjust an instruction content of the first target control instruction according to the temperature information and/or the air pressure information.

For example, in an embodiment, the first controller 130 acquires the weight of the container 300 through the weighing module 110 first, and in combination the temperature information acquired by the temperature sensor 160 and according to the air pressure information of current environment of the induction cooker acquired by the air pressure sensor 170, temperature of the food ingredients and the water and the boiling point corresponding to a current air pressure can be accurately obtained, so as to accurately judge a boiling situation of the water in the container.

In an embodiment, the working state of the electromagnetic power output module 120 may also be controlled as needed. When the water in the container 300 boils, output power of the electromagnetic power output module 120 is reduced, so as to set and maintain a continuous boiling state of the water in the container without excessive water loss. When the water loss reaches a certain level, the second controller 240 controls the water outlet 220 on the cover body 200 to add water through the fluid control device 230.

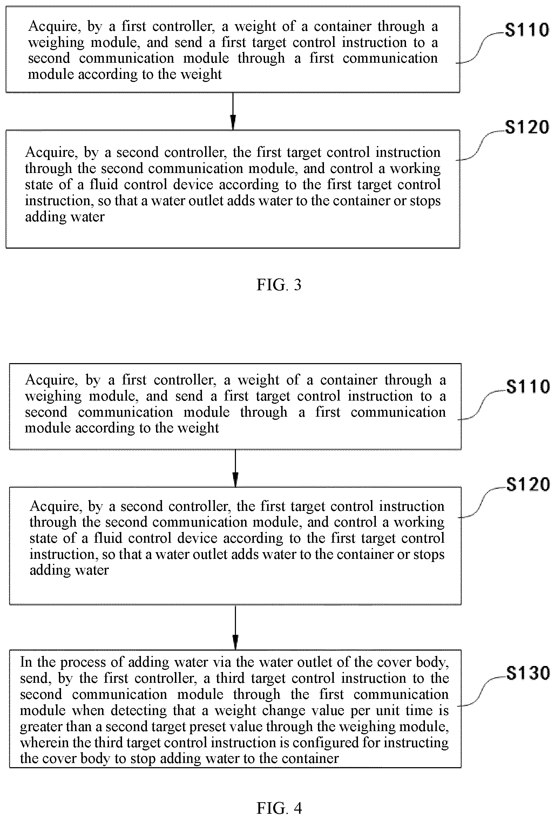

With reference to FIG. 3, FIG. 3 is a flow chart of a control method of the weighable induction cooker provided by an embodiment of the present invention. The control method may be applied to the weighable induction cooker as shown in FIG. 1 to FIG. 2, and the control method comprises, but is not limited to, the following steps.

In step S110, the first controller acquires the weight of the container through the weighing module, and sends the first target control instruction to the second communication module through the first communication module according to the weight.

In step S120, the second controller acquires the first target control instruction through the second communication module, and controls the working state of the fluid control device according to the first target control instruction, so that the water outlet adds water to the container or stops adding water.

Through the step S110 to the step S120 above, when using the induction cooker, the first controller 130 monitors and acquires the weight of the water and the food ingredients in the container 300 through the weighing module 110, and controls the fluid control device 230 on the cover body 200 according to the weight change value to realize automatic quantitative water addition of the water outlet, and the cover body does not need to be removed when adding water, so that a water volume in the container 300 can be accurately controlled, the operation is convenient, and food ingredient cooking can be performed automatically.

In an embodiment, the step S 110 above specifically comprises the following step.

The first controller acquires an initial weight of the container through the weighing module, and sends the first target control instruction to the second communication module through the first communication module, wherein the first target control instruction comprises a water adding instruction for instructing the cover body to add water to the container.

In this step, the first controller 130 acquires the initial weight of the container through the weighing module 110, which means that the container is detected to be placed on the induction cooker body 110. In this case, the cover body 200 may be controlled to add water to the container 300 according to a preset program, which means that the first controller 130 sends the first target control instruction to the second communication module 250 through the first communication module 140, wherein the first target control instruction comprises the water adding instruction. After the second controller 240 receives the water adding instruction through the second communication module 250, the fluid control device 230 is controlled to turn on, so that water in the water tank 400 is added to the container 300 through the water outlet 220 of the cover body 200.

In another embodiment, the step S 110 above specifically comprises the following step.

In the process of adding water to the container via the cover body, the first controller acquires a first weight change value of the container through the weighing module, and sends the first target control instruction to the second communication module through the first communication module when the first weight change value reaches a first preset value, wherein the first target control instruction comprises a water adding stop instruction for instructing the cover body to stop adding water to the container.

In this step, in the process of adding water to the container 300 via the cover body 200, the first controller 130 monitors a weight of water added to the container 300 via the cover body 200 in real time through the weighing module 110, so as to obtain the first weight change value of the container 300. The first controller 130 sends the first target control instruction to the second communication module 250 through the first communication module 140 when the first weight change value reaches the first preset value. The first target control instruction comprises the water adding stop instruction for instructing the cover body to stop adding water to the container. After receiving the water adding stop instruction, the second controller 240 controls the fluid control device 230 to turn off, and the water outlet 220 stops adding water. Therefore, an automatic quantitative water addition function is realized.

In another embodiment, the step S 110 above specifically comprises the following step.

In the process of heating the container 300 by the electromagnetic power output module 120, the first controller 130 acquires a second weight change value of the container 300 through the weighing module 110, and sends the first target control instruction to the second communication module 250 through the first communication module 140 when the second weight change value reaches a second preset value, wherein the first target control instruction comprises the water adding instruction for instructing the cover body 200 to add water to the container 300. In this case, the second controller 240 controls the fluid control device 230 to turn on in response to the water adding instruction, and the water outlet 220 adds water to the container 300.

Subsequently, the first controller 130 acquires a third weight change value of the container 300 through the weighing module 110, and sends the first target control instruction to the second communication module 250 through the first communication module 140 when the third weight change value reaches a third preset value, wherein the first target control instruction comprises the water adding stop instruction for instructing the cover body to stop adding water to the container.

In this step, the induction cooker is in a normal heating state, and the food ingredients in the container 300 are heated all the time, which may lead to water loss. Therefore, when the first controller 130 detects that the second weight change value of the container 300 reaches the second preset value through the weighing module 110, it is indicated that there is large water loss, so that the first controller 130 sends the water adding instruction to the cover body 200, and then monitors the third weight change value of the container 300 to judge a preset water adding volume. In this way, quantitative water supply to the container 300 can be completed, and normal cooking of the food ingredients is prevented from being affected by the water loss.

In an embodiment of this step, in the process of heating the container 300 by the electromagnetic power output module 120, the first controller 130 needs to determine whether weight loss belongs to evaporation water loss or other types of weight loss (such as taking away the container 300 suddenly) to avoid mistaken water addition caused by taking away the container 300 suddenly according to the second weight change value of the container 300 acquired by the weighing module 110. Therefore, the first controller 130 sends the first target control instruction to the second communication module 250 through the first communication module 140 only when the second weight change value reaches the second preset value and a unit time change quantity of the second weight change value is smaller than a first target preset value (which means that the weight is lost slowly due to evaporation), wherein the first target control instruction comprises the water adding instruction for instructing the cover body to add water to the container.

In another embodiment, the step S 110 above specifically comprises the following step.

In the process of heating the container by the electromagnetic power output module, the first controller acquires a first temperature of the container through the temperature sensor and a fourth weight change value of the container through the weighing module, and sends the first target control instruction to the second communication module through the first communication module when the first temperature is greater than a preset temperature value and the fourth weight change value reaches a fourth preset value, wherein the first target control instruction comprises an anti-drying instruction for instructing the cover body to add water to the container.

In this step, the induction cooker is in a normal heating state, and when the first controller 130 detects that the temperature of the container 300 is too high (which means that the first temperature is greater than the preset temperature value) through the temperature sensor 160, and the weight loss of the container 300 is large (which means that the fourth weight change value reaches the fourth preset value), it is indicated that the induction cooker is about to dry-burn. In this case, the first controller 130 sends the first target control instruction to the second communication module 250 through the first communication module 140, wherein the first target control instruction comprises the anti-drying instruction. After the second controller 240 receives the anti-drying instruction, the water is added to the container 300 through the fluid control device to avoid drying.

In another embodiment, the above step S110 specifically comprises the following steps.

The first controller 130 obtains a type and a weight of the food ingredients to be placed in the container 300.and

The first controller 130 controls the first communication module 140 to send the first target control instruction to the second communication module 250 according to the type of the food ingredients and the weight of the food ingredients obtained through the weighing module 110, so that the second controller 240 controls the fluid control device 230 to automatically add water according to the first target control instruction.

The first controller 130 further controls the electromagnetic power output module 120 to heat the food ingredients based on the type and the weight of the food ingredients.

In an embodiment, the first controller 130 obtains the type and the weight of the food ingredients to be placed in the container 300 by acquiring settings input by a user or by automatically identifying the food ingredients. For example, the user may manually input the desired food ingredients and their weights through a control panel (not shown in the figures) on the induction cooker body 100. In another embodiment, automatic identification of the food ingredients may also be performed. For example, a camera (not shown in the figures) built into the container 300 may automatically identify the required weight of the food ingredients. Alternatively, the food ingredients to be placed in the container 300 along with their weights may be automatically identified based on the cooking steps in a recipe input by the user. In an embodiment, the preset temperature value is set according to a boiling point corresponding to an air pressure value of a surrounding environment acquired by the air pressure sensor, and the fourth preset value is set according to a weight of the food ingredients and an initial volume of the water acquired by the weighing module.

With reference to FIG. 4, in an embodiment, the control method of the weighable induction cooker further comprises the following step.

In step S130, in the process of adding water via the water outlet 220 of the cover body 200, the first controller 130 sends a third target control instruction to the second communication module 250 through the first communication module 140 when detecting that a weight change value per unit time is greater than a second target preset value through the weighing module 110, wherein the third target control instruction is configured for instructing the cover body to stop adding water to the container.

In this step, when the first controller 130 detects that the weight change value per unit time is greater than the second target preset value, it is indicated that the weight of the container suddenly changes, which may be caused by the withdrawal of the container 300 or the failure of the fluid control device 230. After receiving the third target control instruction, the second controller 240 controls the fluid control device 230 to turn off to stop adding water to the container 300.

In an embodiment, with reference to FIG. 2, the induction cooker body 100 further comprises an alarm module 180, and the alarm module 180 is connected with the first controller 130. The control method of the weighable induction cooker further comprises the following step.

In the process of heating the container 300 by the electromagnetic power output module 120, the first controller 130 acquires a fifth weight change value of the container 300 through the weighing module 110, and controls the alarm module 180 to perform water boiling notification and/or turn off the electromagnetic power output module 120 when the fifth weight change value reaches a fifth preset value.

In this step, by monitoring the weight loss of the container 300, when the fifth weight change value reaches the fifth preset value, it is indicated that the water in the container 300 has boiled, and the electromagnetic power output module 120 may be automatically turned off through the alarm module 180 or according to a preset program function. In this step, it is judged whether the water in the container 300 boils by monitoring the weight change. Compared with the way of detecting boiling by temperature, this embodiment eliminates the influence of air pressures at different altitudes on the boiling point, so that the boiling situation of the water in the container 300 can be accurately judged.

In an embodiment, the control method of the weighable induction cooker further comprises the following step.

In the process of heating the container 300 by the electromagnetic power output module 120, the first controller 130 acquires the first temperature of the container 300 through the temperature sensor 160 and the fourth weight change value of the container 300 through the weighing module 110, and controls the alarm module to perform anti-drying notification and/or turn off the electromagnetic power output module when the first temperature is greater than the preset temperature value and the fourth weight change value reaches the fourth preset value.

In this step, when it is detected that both the first temperature and the fourth weight change value reach the corresponding preset values, it is indicated that the current container is about to dry-burn. In this case, the alarm module 180 is controlled to perform anti-drying notification and/or turn off electromagnetic output of the electromagnetic power output module 120.

In an embodiment of the present invention, when the water boiling notification and/or the anti-drying notification is performed, the first controller 130 acquires an alarm signal of the alarm module, and then sends the alarm signal to the cover body 200 through the first communication module 140. After acquiring the alarm signal through the second communication module 250, the second controller 240 sends the alarm signal to the server, the mobile terminal or the smart home control module through the Internet of Things communication module 250.

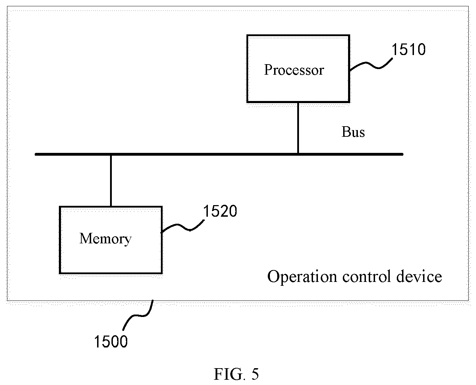

With reference to FIG. 5, an embodiment of the present invention provides an operation control device 1500, which comprises a memory 1520, a processor 1510, and a computer program stored on the memory 1520 and executable on the processor 1510, wherein the processor 1510 executes the program to implement the control method according to the embodiment in the second aspect above, such as executing the method steps S110 to S120 in FIG. 3 or executing the method steps S110 to S130 in FIG. 4.

An embodiment of the present invention provides an induction cooker, which comprises the operation control device according to the embodiment above.

An embodiment of the present invention provides a computer-readable storage medium, wherein the computer-readable storage medium stores a computer-executable instruction, and the computer-executable instruction is configured for enabling a computer to execute the control method of the induction cooker according to the embodiment above.

An embodiment of the present invention further discloses a computer program product, which comprises a computer program or a computer instruction, wherein the computer program or the computer instruction is stored in a computer-readable storage medium, the processor of the operation control device reads the computer program or the computer instruction from the computer-readable storage medium, and the processor executes the computer program or the computer instruction, so that the operation control device executes the control method of the induction cooker according to the above-mentioned embodiment.

Those of ordinary skills in the art can understand that all or some of steps in the method and systems disclosed above can be implemented as software, firmware, hardware and appropriate combinations thereof. Some or all of the physical components can be implemented as software executed by a processor, such as a central processing unit, a digital signal processor or a microprocessor, or implemented as hardware, or implemented as an integrated circuit, such as an application-specific integrated circuit. Such software can be distributed on a computer-readable medium, and the computer-readable medium may comprise a computer storage medium or a nontransitory medium, and a communication medium or a transitory medium. It is well known to those of ordinary skills in the art that the term 'computer storage medium' comprises a volatile and nonvolatile, removable and non-removable medium implemented in any method or technology for storing information, such as a computer readable instruction, a data structure, a program module, or other data. The computer storage media comprise but are not limited to RAM, ROM, EEPROM, flash storage or other storage technologies, CD-ROM, digital versatile disk DVD or other optical disk storage, magnetic box, magnetic tape, magnetic disk storage or other magnetic storage devices, or any other media capable of being used to store desired information and accessed by a computer. Furthermore, it is well known to those of ordinary skills in the art that the communication media typically comprise a computer readable instruction, a data structure, a program module or other data in a modulated data signal such as a carrier wave or other transmission mechanism, and may comprise any information delivery medium.

The embodiments of the present invention are described in detail with reference to the drawings above, but the present invention is not limited to the above embodiments, and various changes may also be made within the knowledge scope of those of ordinary skills in the art without departing from the purpose of the present invention.

## Claims

1. A weighable induction cooker, comprising:
a container (300) for containing water and food ingredients, wherein a first opening is arranged in the container (300);
an induction cooker body (100) comprising a weighing module (110) for measuring a weight of the container (300), an electromagnetic power output module (120) for heating the water and the food ingredients in the container (300), a first controller (130) and a first communication module (140), wherein the first controller (130) is in communication connection with the weighing module (110), the electromagnetic power output module (120) and the first communication module (140) respectively;
a water tank (400) for storing water; and
a cover body (200) for closing the first opening of the container (300), wherein the cover body (200) further comprises a water inlet (210), a water outlet (220) for adding water to the container (300), a fluid control device (230) for controlling water discharge of the water outlet (220), a second controller (240) and a second communication module (250), the water inlet (210) is connected with the water tank (400), the water outlet (220) is connected with the water inlet (210) through the fluid control device (230), the second controller (240) is connected with the second communication module (250) and the fluid control device (230) respectively, and the second communication module (250) is in communication connection with the first communication module (140);
wherein the first controller (130) is configured to acquire the weight of the container (300) through the weighing module (110), and send a first target control instruction to the second communication module (250) through the first communication module (140) according to the weight, and the second controller (240) is configured to acquire the first target control instruction through the second communication module (250), and control a working state of the fluid control device (230) according to the first target control instruction, so that the water outlet (220) adds water to the container (300) or stops adding water;

2. The weighable induction cooker according to claim 1, wherein the fluid control device (230) is a water pump or a water flow switch.

3. The weighable induction cooker according to claim 1, wherein the water tank (400) is arranged outside the cover body (200) and the induction cooker body (100), or the water tank (400) is arranged inside the induction cooker body (100).

4. The weighable induction cooker according to claim 1, wherein an Internet of Things communication module (260) for communicating with a server, a mobile terminal or a smart home control module is further arranged in the cover body (200), the Internet of Things communication module (260) is in communication connection with the second controller (240), the second controller (240) is configured to acquire an Internet of Things control signal through the Internet of Things communication module (260), and control the working state of the fluid control device (230) according to the Internet of Things control signal, and/or send a second target control instruction to the induction cooker body (100) through the second communication module (250).

5. The weighable induction cooker according to claim 1, wherein a temperature sensor (160) and an air pressure sensor (170) are further arranged in the induction cooker body (100), the first controller (130) is connected with the temperature sensor (160) and the air pressure sensor (170) respectively, and the first controller (130) is configured to acquire temperature information of the container (300) through the temperature sensor (160), acquire air pressure information of a current working environment of the induction cooker through the air pressure sensor (170), and adjust an instruction content of the first target control instruction according to the temperature information and/or the air pressure information.

6. The weighable induction cooker according to claim 1, wherein the induction cooker body (100) further comprises a supporting component (150) for supporting the container (300), and the electromagnetic power output module (120) and the weighing module (110) are arranged below the supporting component (150).

7. The weighable induction cooker according to claim 6, wherein the electromagnetic power output module (120) comprises a power output circuit and a coil arranged below the supporting component (150), the weighing module (110) comprises a strain gauge arranged inside or around the coil, the strain gauge is connected with the first controller (130), and the coil is connected with the first controller (130) through the power output circuit.

8. The weighable induction cooker according to claim 1, wherein the first controller (130) is configured to obtain a type and a weight of the food ingredients to be placed in the container (300), and control the first communication module (140) to send the first target control instruction to the second communication module (250) according to the type of the food ingredients placed in the container (300) and the weight of the food ingredients obtained through the weighing module (110), so that the second controller (240) controls the fluid control device (230) to automatically add water according to the first target control instruction; the first controller (130) is further configured to control the electromagnetic power output module (120) to heat the food ingredients in the container (300) based on the type and the weight of the food ingredients, wherein the first controller (130) is configured to obtain the type and the weight of the food ingredients to be placed in the container (300) by acquiring settings input by a user or by automatically identifying the food ingredients.

9. A control method, applied to the weighable induction cooker according to any one of claims 1-8, comprising:
acquiring (S110), by the first controller (130), the weight of the container (300) through the weighing module (110), and sending the first target control instruction to the second communication module (250) through the first communication module (140) according to the weight; and
acquiring (S120), by the second controller (240), the first target control instruction through the second communication module (250), and controlling the working state of the fluid control device (230) according to the first target control instruction, so that the water outlet (220) adds water to the container (300) or stops adding water.

10. The control method according to claim 9, wherein the acquiring (S110), by the first controller (130), the weight of the container (300) through the weighing module (110), and sending the first target control instruction to the second communication module (250) through the first communication module (140) according to the weight, comprises at least one of:
acquiring, by the first controller (130), an initial weight of the container (300) through the weighing module (110), and sending the first target control instruction to the second communication module (250) through the first communication module (140), wherein the first target control instruction comprises a water adding instruction for instructing the cover body (200) to add water to the container (300); or
in the process of adding water to the container (300) by the cover body (200), acquiring, by the first controller (130), a first weight change value of the container (300) through the weighing module (110), and sending the first target control instruction to the second communication module (250) through the first communication module (140) when the first weight change value reaches a first preset value, wherein the first target control instruction comprises a water adding stop instruction for instructing the cover body (200) to stop adding water to the container (300); or
in the process of heating the container (300) by the electromagnetic power output module (120), acquiring, by the first controller (130), a second weight change value of the container (300) through the weighing module (110), and sending the first target control instruction to the second communication module (250) through the first communication module (140) when the second weight change value reaches a second preset value, wherein the first target control instruction comprises the water adding instruction for instructing the cover body (200) to add water to the container (300), and then, acquiring, by the first controller (130), a third weight change value of the container (300) through the weighing module (110), and sending, the first target control instruction to the second communication module (250) through the first communication module (140) when the third weight change value reaches a third preset value, wherein the first target control instruction comprises the water adding stop instruction for instructing the cover body (200) to stop adding water to the container (300); or
in the process of heating the container (300) by the electromagnetic power output module (120), acquiring, by the first controller (130), a first temperature of the container (300) through the temperature sensor (160) and a fourth weight change value of the container (300) through the weighing module (110), and sending the first target control instruction to the second communication module (250) through the first communication module (140) when the first temperature is greater than a preset temperature value and the fourth weight change value reaches a fourth preset value, wherein the first target control instruction comprises an anti-drying instruction for instructing the cover body (200) to add water to the container (300).

11. The control method according to claim 9, wherein the induction cooker body (100) further comprises an alarm module (180), the alarm module (180) is connected with the first controller (130), and the control method further comprises:
in the process of heating the container (300) by the electromagnetic power output module (120), acquiring, by the first controller (130), a fifth weight change value of the container (300) through the weighing module (110), and controlling the alarm module (180) to perform water boiling notification and/or turn off the electromagnetic power output module (120) when the fifth weight change value reaches a fifth preset value.

12. The control method according to claim 9, wherein the acquiring (S110), by the first controller (130), the weight of the container (300) through the weighing module (110), and sending the first target control instruction to the second communication module (250) through the first communication module (140) according to the weight, comprises:
obtaining, by the first controller (130), a type and a weight of the food ingredients to be placed in the container (300);
controlling, by the first controller (130), the first communication module (140) to send the first target control instruction to the second communication module (250) based on the type of the food ingredients placed in the container (300) and the weight of the food ingredients obtained through the weighing module (110), so that the second controller (240) controls the fluid control device (230) to automatically add water according to the first target control instruction; wherein the first controller (130) is configured to obtain the type and the weight of the food ingredients to be placed in the container (300) by acquiring settings input by a user or by automatically identifying the food ingredients;
controlling, by the first controller (130), the electromagnetic power output module (120) to heat the food ingredients in the container (300) based on the type and the weight of the food ingredients.
